# EUROPEAN PATENT APPLICATION

(11) **EP 2 197 134 A1**
(43) Date of publication of application: **16.06.2010**
(21) Application number: 08854828.4
(22) Date of filing: 28.10.2008
(51) Int. Cl.: H04J 11/00, H04B 1/16

(54) **SIGNAL DEMODULATION DEVICE, SIGNAL DEMODULATION METHOD, SEMICONDUCTOR INTEGRATED CIRCUIT, AND RECEPTION DEVICE**

(30) Priority: 27.11.2007 JP 2007305663
(71) Applicant: Panasonic Corporation, Kadoma-shi Osaka 571-8501 (JP)
(72) Inventor: YAGI, Tetsuya c/o Panasonic Corporation, IPROC, Chuo-ku, Osaka-shi, Osaka 540-6207 (JP); HAYASHI, Takaya c/o Panasonic Corporation, IPROC, Chuo-ku, Osaka-shi, Osaka 540-6207 (JP); HAYASHI, Kenichiro c/o Panasonic Corporation, IPROC, Chuo-ku, Osaka-shi, Osaka 540-6207 (JP); KIMURA, Tomohir c/o Panasonic Corporation, IPROC, Chuo-ku, Osaka-shi, Osaka 540-6206 (JP)
(74) Representative: Kügele, Bernhard
(86) International application number: PCT/JP2008/069538
(87) International publication number: WO 2009/069420

(57) **Abstract**

There is provided a signal demodulating device, including: a time frequency converting unit (6) for converting a frequency division multiplexing signal on a time axis into a signal on a frequency axis to output a data carrier, a pilot carrier, and a transmission control carrier; an equalizer (7) for equalizing the data carrier and the transmission control carrier according to a characteristic value of a transmission line obtained from the pilot carrier to output an equalized data carrier and an equalized transmission control carrier; a first decoding unit (9) for decoding the equalized transmission control carrier; and a first correcting unit (10) for performing first error-correction on an output of said first decoding unit (9) to output first control information and a first decoding flag that indicates a status of the first error-correction.

## Description

### [Technical field]

The present invention relates to a signal demodulating device, a signal demodulating method, a semiconductor integrated circuit, and a receiving apparatus that demodulate frequency division multiplexing signals, especially orthogonal frequency division multiplexing signals (hereinafter, "OFDM signals") used for digital terrestrial television services.

### [Background art]

In Japan, the digital terrestrial television services have been started since 2003 according to the ISDB-T standard. At first in Europe, North America, South America, and the Asian countries, and then in all of the world, contents of analog broadcasting are digitized, and the digital terrestrial television services have been starting. In many of these countries, technology according to the ISDB-T standard of Japan, or technology based thereon is used, and the OFDM signals composed by orthogonally multiplexing many carriers on a frequency axis are utilized.

The OFDM signals include: transmission control carriers for transmitting information of a modulating method and a transmitting bandwidth, or the like; pilot carriers used for calculating a transmission line characteristic; and data carriers including actual data. The OFDM signals are composed by multiplexing these carriers on the frequency axis. For this reason, a signal demodulating device demodulates multiplexed carriers using time frequency conversion represented by Fast Fourier Transform (hereinafter "FFT"), and also detects frame synchronization.

The signal demodulating device decodes the transmission control carriers obtained according to the time frequency conversion, and acquires information of a modulating method, a transmitting bandwidth, or the like (See Document 1: Published Japanese patent Application Laid-open No. 2002-247003, for example). Herein, the signal demodulating device according to prior art decodes the transmission control carriers included in an output of a time frequency converting unit.

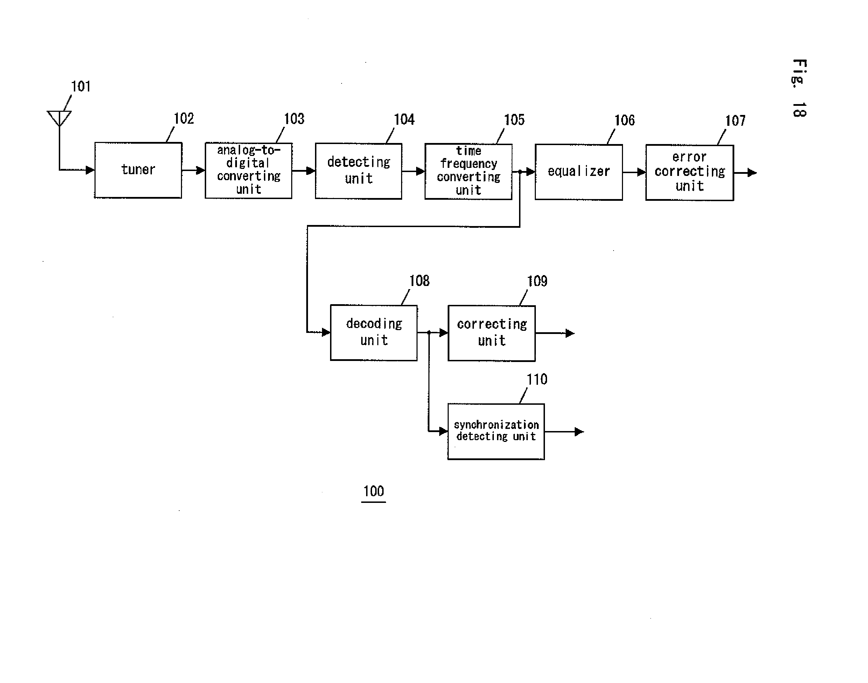

Fig. 18 is a block diagram of a signal demodulating device according to

### prior art.

A signal demodulating device 100 is provided with: an antenna 101; a tuner 102, an analog-to-digital converter 103; a detecting unit 104; a time frequency converting unit 105; an equalizer 106; an error correcting unit 107; a decoding unit 108; a correcting unit 109; and a synchronization detecting unit 110.

Received signals including OFDM signals are signals on a time axis, and are received by the antenna 101. The received signals on the time axis are processed by the tuner 102, the analog-to-digital converter 103, and the detecting unit 104, and then are converted into signals on a frequency axis by the time frequency converting unit 105. Thereby, transmission control carriers or the like multiplexed on the frequency axis are extracted.

The decoding unit 108 decodes the transmission control carriers outputted from the time frequency converting unit 105. The correcting unit 109 corrects errors of the decoded transmission control carriers. The synchronization detecting unit 110 detects frame synchronization. The error-corrected transmission control carriers and the frame synchronization are outputted to an element not shown in Figs. as control information and synchronization information, and will be utilized in the following signal-decoding.

Thus, the conventional signal demodulating device uses the transmission control carriers extracted by the time frequency converting unit 105 for decoding of the control information and the synchronization information. [Document 1] Published Japanese patent Application Laid-open on No. 2002-247003

### [Disclosure of Invention]

### [Problem(s) to be Solved by Invention]

The decoding processing of the transmission control carriers by the conventional signal demodulating device possesses strong toughness against white noises.

Herein, the digital terrestrial television services using OFDM signals are received not only by fixed receiving apparatuses but also by mobile receiving apparatuses, such as a car-mounted television set, a mobile phone, or the like. In mobile communications, not only the general white noises but also noises caused by a multipath, a phasing, or the like may become stronger in some cases.

In the OFDM signals according to the ISDB-T standard, one bandwidth is divided into thirteen segments. There are included thirteen-segment broadcasting using carriers of all of the thirteen segments, and one-segment broadcasting using only carriers of one segment among the thirteen segments. In mobile receiving, the one-segment broadcasting with a poor carrier number is used in many cases, and decoding transmission control carriers easily becomes difficult according to prior art, accordingly. Similarly, detecting frame synchronization also tends to become difficult according to prior art.

In addition, the mobile receiving apparatuses may move in some cases, or may not move in other cases. That is, dominant noises in receiving environment may change white noises to phasing noises or reversely every moment according to a situation thereof. For this reason, in prior art, there is a problem that decoding transmission control carriers may become difficult when a situation in mobile receiving changes.

In view of the above, an object of the present invention is to provide a signal demodulating device, a signal demodulating method, a semiconductor integrated circuit, and a receiving apparatus that can perform decoding transmission control carriers corresponding to change of receiving environment and perform detecting frame synchronization.

### [Means for Solving Problem(s)]

In order to resolve the above problem, a signal demodulating device according to the present invention comprises: a time frequency converting unit operable to convert a frequency division multiplexing signal on a time axis into a signal on a frequency axis to output a data carrier, a pilot carrier, and a transmission control carrier; an equalizer operable to equalize the data carrier and the transmission control carrier according to a characteristic value of a transmission line obtained from the pilot carrier to output an equalized data carrier and an equalized transmission control carrier; a first decoding unit operable to decode the equalized transmission control carrier; and a first correcting unit operable to perform first error-correction on an output of the first decoding unit to output first control information and a first decoding flag that indicates a status of the first error-correction.

### [Effect of Invention]

The present invention enables to decode transmission control carriers and to optimally perform frame synchronization detection corresponding to noise environment changing every moment with high speed. In particular, the decoding device can manage environment having many white noises and environment having many phasing noises that may easily change in mobile communications.

Furthermore, the present invention can also optimally manage one-segment broadcasting that is easily affected by change of noise environment.

Decoding transmission control carriers and detecting frame synchronization become hard to be affected by change of noises, thereby improving demodulation precision of OFDM signals.

### [Brief Description of Drawings]

Fig. 1 is a mimetic diagram of an OFDM signal in Embodiment 1 according to the present invention;
Fig. 2 is a diagram illustrating a carrier status of the OFDM signal in Embodiment 1 according to the present invention;
Fig. 3 is a diagram illustrating segment structure of the OFDM signal in Embodiment 1 according to the present invention;
Fig. 4 is a block diagram of a signal demodulating device in Embodiment 1 according to the present invention;
Fig. 5 is an internal block diagram of a first decoding unit in Embodiment 1 according to the present invention;
Fig. 6 is an internal block diagram of a first correcting unit and a second correcting unit in Embodiment 1 according to the present invention;
Fig. 7 is graph illustrating a simulation result of decoding precision in the first decoding unit and a second decoding unit in the present invention;
Fig. 8 is an internal block diagram of the a first synchronization detecting unit and a second synchronization detecting unit in Embodiment 1 according to the present invention;
Fig. 9 is graph illustrating a simulation result of decoding precision in the first decoding unit and the second decoding unit in the present invention;
Fig. 10 is an internal block diagram of an equalizer in Embodiment 2 according to the present invention;
Fig. 11 is an internal block diagram of a second decoding unit in Embodiment 2 according to the present invention;
Fig. 12 is a diagram illustrating flag selection in Embodiment 3 according to the present invention;
Fig. 13 is a block diagram of a device that executes a signal demodulating method in Embodiment 4 according to the present invention;
Fig. 14 is a flow chart of a signal demodulating method in Embodiment 4 according to the present invention;
Fig. 15 is a block diagram of a semiconductor integrated circuit in Embodiment 5 according to the present invention;
Fig. 16 is a block diagram of a receiving apparatus in Embodiment 6 according to the present invention;
Fig. 17 is a perspective view of a mobile phone in Embodiment 6 according to the present invention; and
Fig. 18 is a block diagram of a conventional signal demodulating device.

### [Description of symbols]

- 1:: signal demodulating device
- 2:: antenna
- 3:: tuner
- 4:: analog-to-digital converter
- 5:: detecting unit
- 6:: time frequency converting unit
- 7:: equalizer
- 8:: error correcting unit
- 9:: first decoding unit
- 10:: first correcting unit
- 11:: first synchronization detecting unit
- 12:: control information arbitrating unit
- 13:: synchronization information arbitrating unit
- 14:: second decoding unit
- 15:: second correcting unit
- 16:: second synchronization detecting unit

### [Best Mode for Carrying out the Invention]

A first aspect according to the present invention provides a signal demodulating device, comprising: a time frequency converting unit operable to convert a frequency division multiplexing signal on a time axis into a signal on a frequency axis to output a data carrier, a pilot carrier, and a transmission control carrier; an equalizer operable to equalize the data carrier and the transmission control carrier according to a characteristic value of a transmission line obtained from the pilot carrier to output an equalized data carrier and an equalized transmission control carrier; a first decoding unit operable to decode the equalized transmission control carrier; and a first correcting unit operable to perform first error-correction on an output of the first decoding unit to output first control information and a first decoding flag that indicates a status of the first error-correction.

This arrangement enables the signal demodulating device to decode transmission control carriers with sufficient toughness against phasing noises. Especially, even if change of receiving environment causes phasing noises to be stronger, the signal demodulating device can decode transmission control carriers with sufficient precision.

A second aspect according to the present invention provides a signal demodulating device defined in the first aspect, further comprising: a second decoding unit operable to decode the transmission control carrier outputted from the time frequency converting unit; a second correcting unit operable to perform second error-correction on an output of the second decoding unit to output second control information and a second decoding flag that indicates a status of the second error-correction; and a control information arbitrating unit operable to alternatively select one of the first control information and the second control information based on at least one of the first decoding flag and the second decoding flag.

With this arrangement, the signal demodulating device can use the first control information with toughness strong against phasing noises in such environment having many phasing noises, and can use the second control information with toughness strong against environment having many white noises in such environment. As a result, precision of signal-demodulating is improved.

A third aspect according to the present invention provides a signal demodulating device defined in the second aspect, further comprising: a first synchronization detecting unit operable to perform first frame synchronization detection based on an output of the first decoding unit to output first synchronization information and a first synchronization flag that indicates a status of the first frame synchronization detection; a second synchronization detecting unit operable to perform second frame synchronization based on an output of the second decoding unit to output second synchronization information and a second synchronization flag that indicates a status of the second frame synchronization detection; and a synchronization information arbitrating unit operable to alternatively select one of the first synchronization information and the second synchronization information based on at least one of the first synchronization flag and the second synchronization flag.

With this arrangement, the signal demodulating device can use the first synchronization information with toughness strong against phasing noises in such environment having many phasing noises, and can use the second synchronization information with toughness strong against environment having many white noises in such environment. As a result, precision of signal-demodulating is improved.

A fourth aspect according to the present invention provides a signal demodulating device defined in the third aspect, wherein: the first decoding flag includes a status of "COMPLETED" indicating that the first error-correction related to the first control information has been performed correctly, and a status of "INCOMPLETED" indicating that the first error-correction has not been performed correctly; the second decoding flag includes a status of "COMPLETED" indicating that the second error-correction related to the second control information has been performed correctly, and a status of "INCOMPLETED" indicating that the second error-correction has not been performed correctly; and each of the first synchronization flag and the second synchronization flag includes a status of "DETECTED" indicating that frame synchronization has been completed, and a status of "UNDETECTED" indicating that frame synchronization has not been completed.

This arrangement enables the signal demodulating device to select control information with high decoding precision and to select synchronization information with high detecting precision if needed. As a result, precision of signal-demodulating is improved.

A fifth aspect according to the present invention provides a signal demodulating device defined in the fourth aspect, wherein: the control information arbitrating unit selects first one of the first control information and the second control information, the first one corresponding to the status of "COMPLETED"; and the synchronization information arbitrating unit selects second one of the first synchronization information and the second synchronization information, the second one corresponding to the status of "DETECTED".

This arrangement enables the signal demodulating device to select control information with high decoding precision and to select synchronization information with high detecting precision if needed. As a result, precision of signal-demodulating is improved.

A sixth aspect according to the present invention provides a signal demodulating device defined in the fourth aspect, wherein: the control information arbitrating unit selects previously selected one of first control information and the second control information when the first decoding flag and the second decoding flag indicate the same level status; the synchronization information arbitrating unit selects previously selected one of the first synchronization information and the second synchronization information when the first synchronization flag and the second synchronization flag indicate the same level status.

This arrangement enables the signal demodulating device to select the most suitable control information and synchronization information according to change of receiving statuses.

A seventh aspect according to the present invention provides a signal demodulating device defined in the fourth aspect, wherein: the control information arbitrating unit measures a first number of statuses indicating "COMPLETED" of the first decoding flag and a second number of statuses indicating "COMPLETED" of the second decoding flag within a predetermined period; the synchronization information arbitrating unit selects the more of the first number and the second number, and selects control information corresponding to the more among the first control information and the second control information control information; the synchronization information arbitrating unit measures a third number of statuses indicating "DETECTED" of the first synchronization flag and a fourth number of statuses indicating "DETECTED" of the second synchronization flag within a predetermined period; and the synchronization information arbitrating unit selects the more of the third number and the fourth number, and selects synchronization information corresponding to the more among the first synchronization information and the second synchronization information.

This arrangement enables the signal demodulating device to select the most suitable control information and synchronization information according to change of receiving statuses.

Hereafter, referring to the accompanying drawings, preferred embodiments of the present invention will now be explained.

In the following Embodiments, OFDM signals based on the ISDB-T standard is mainly explained. The following explanation is, however, as the same with respect to OFDM signals not based on the ISDB-T standard, and frequency division multiplexing signals that carriers have been multiplexed on a frequency axis, or the like. The present invention also includes cases where such signals are decoded.

Control information (first control information, and second control information) described in the specification includes TMCC signals in the ISDB-T standard, for example.

Needless to say, the words of "first" and "second" in this specification are used merely for distiguishing similar elements from each other, neither add a specific limitation nor mean excluding to add a further similar element.

### (Embodiment 1)

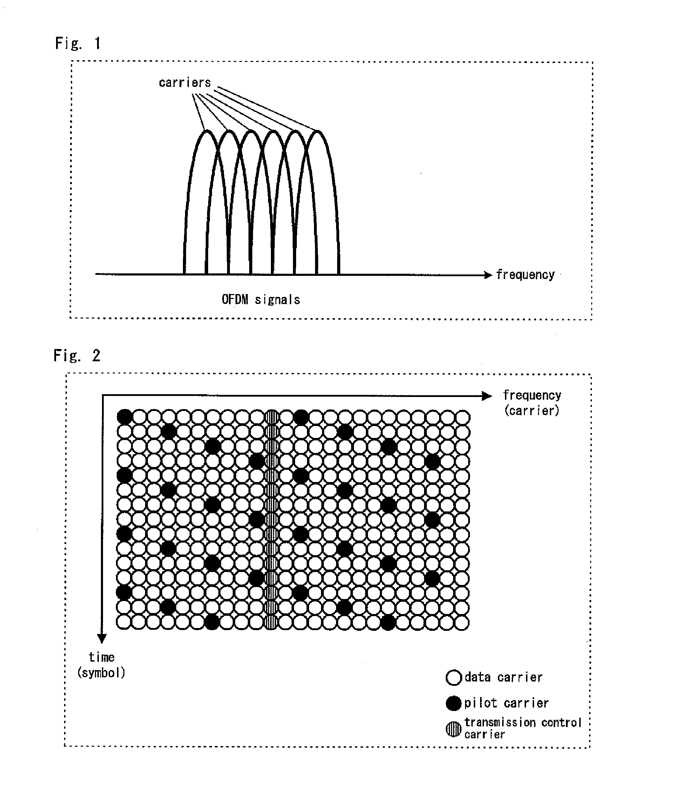

First, an OFDM signal based on the ISDB-T standard will now be explained referring to Fig. 1, Fig. 2, and Fig. 3.

Fig. 1 is a mimetic diagram of an OFDM signal in Embodiment 1 according to the present invention. The OFDM signal is composed by multiplexing a plurality of carriers on a frequency axis. Especially, the carriers are orthogonally multiplexed with each other. In general, it is thought that such an OFDM signal is tough against multipaths.

Fig. 2 is a diagram illustrating a carrier status of the OFDM signal in Embodiment 1 according to the present invention. As illustrated in Fig. 2, in the OFDM signal, a plurality of carriers are multiplexed on a frequency axis to form one signal symbol (hereinafter a "symbol"), and a plurality of symbols are multiplexed on a time axis.

The OFDM signal includes: data carriers including modulated visual and/or audio data; pilot carriers used for checking a status of a transmission path; and transmission control carriers for transmitting information with respect to transmission, such as a modulating method, a bandwidth, or the like.

As clear from Fig. 2, transmission control carriers exist in the same position among the symbols. The pilot carriers are arranged at fixed interval. The data carriers are arranged in positions where transmission control carriers and pilot carriers do not exist.

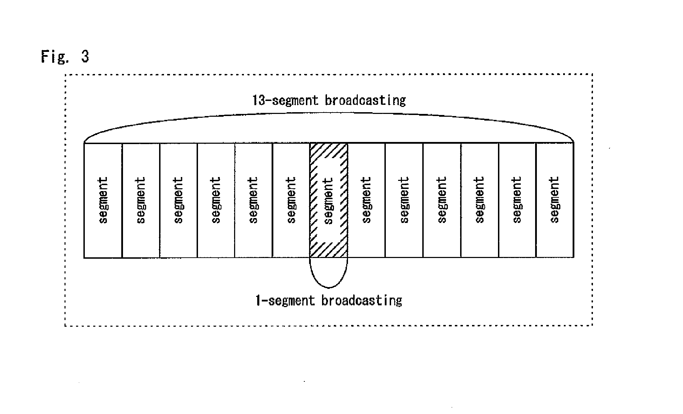

Fig. 3 is a diagram illustrating a segment structure of the OFDM signal in Embodiment 1 according to the present invention.

As clear from Fig. 3, one OFDM signal bandwidth is divided into thirteen segments in the ISDB-T standard. Broadcasting using carriers of all of the thirteen segments is called thirteen-segment broadcasting, and broadcasting using only one central segment is called one-segment broadcasting. In many cases, the one-segment broadcasting is used for mobile terminals, such as a handheld device and a car-mounted terminal.

As clear from Fig. 3, in the one-segment broadcasting, since a used carrier number is less than that of thirteen-segment broadcasting, it easily becomes difficult to decode transmission control carriers and/or data carriers.

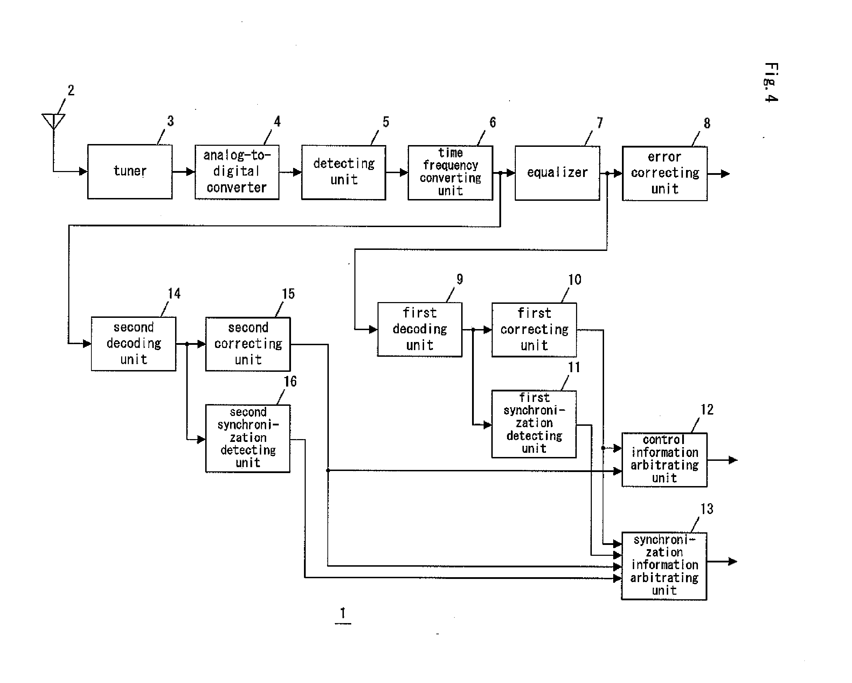

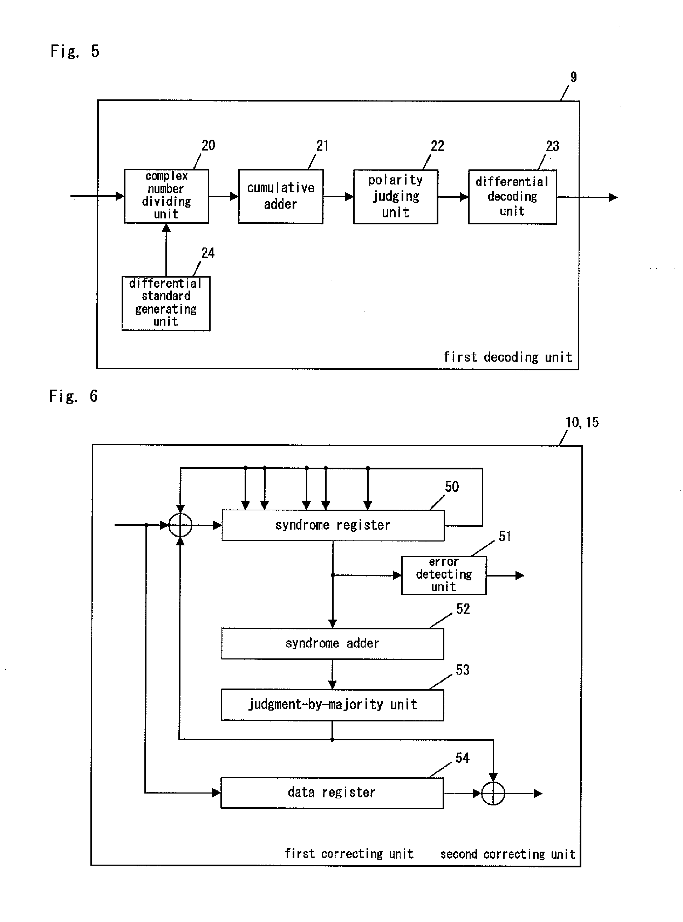

Next, referring to Fig. 4 and Fig. 5, a structure for decoding an equalized transmission control carrier on which equalization processing has been performed will now be explained.

Fig. 4 is a block diagram of a signal demodulating device in Embodiment 1 according to the present invention.

An equalizer 7 equalizes data carriers and transmission control carriers which are outputted from a time frequency converting unit 6 mentioned later. The equalizer 7 performs complex number division on pilot carriers outputted from the time frequency converting unit 6 with a known pilot carrier, and calculates a displacement amount of amplitude and phase thereof Using this calculated displacement amount, the equalizer 7 performs complex number division on data carriers and transmission control carriers, thereby carrying out equalization. Then, the equalizer 7 outputs these equalized data carriers and equalized transmission control carriers.

Since the equalized data carriers and equalized transmission control carriers include signals whose status of transmission line has been taken into consideration, it is thought that the carriers are close to a status of signals at the time of transmission, and further that precise decoding is possible, accordingly.

The signal demodulating device in Embodiment 1 performs decoding using these equalized transmission control carriers. For this decoding, a first decoding unit 9, a first correcting unit 10, and a first synchronization detecting unit 11 are provided.

Hereinafter, the details of each unit are explained.

### (first decoding unit)

The first decoding unit 9 decodes equalized transmission control carriers according to differential decoding.

Fig. 5 is an internal block diagram of the first decoding unit in Embodiment 1 according to the present invention.

The first decoding unit 9 is provided with: a complex number dividing unit 20; a cumulative adder 21; a polarity judging unit 22; a differential decoding unit 23; and a differential standard generating unit 24.

The differential standard generating unit 24 generates a reference value in the differential decoding, and outputs the generated value to a complex number dividing unit 20. The complex number dividing unit 20 performs complex number division on the equalized transmission control carriers with this reference value. The cumulative adder 21 cumulatively adds a plurality of equalized transmission control carriers on which complex number division has been carried out. The polarity judging unit 22 judges the equalized transmission control carriers exist either in a positive domain or in a negative domain on an orthogonal plane. The differential decoding unit 23 decodes equalized transmission control carriers based on a result of the judgment, and outputs a result thereof. This outputted result is first control information.

The first decoding unit 9 decodes equalized transmission control carriers, and outputs the first control information "before error-correction." The first correcting unit 10 performs error-correction on the first control information "before this error-correction", and outputs the first control information "after error-correction."

In this specification, when unnecessary to distinguish from each other for explanation, words of "before this error-correction" and/or words of "after error-correction" may not be added to control information (including both first control information and second control information).

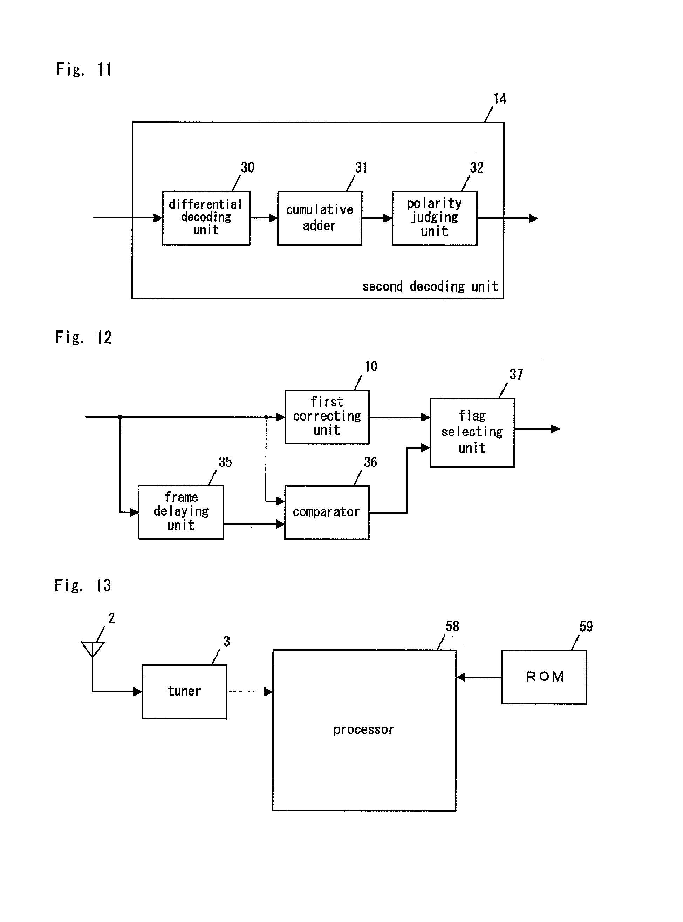

The first decoding unit 9 may possess a structure different from the structure of Fig. 5, such as the same structure (illustrated in Fig. 11) as a second decoding unit 14 later mentioned.

### (first correcting unit)

A first correcting unit 10 of Fig. 4 performs error-correction on the transmission control carriers decoded by the first decoding unit 9, and outputs the first control information. The first control information includes information included in transmission control carriers and further that is needed for demodulating OFDM signals, such as a modulating method, a bandwidth, or the like.

A first correcting unit 10 has the same structure as a second correcting unit 15 mentioned later.

The first correcting unit 10 is provided with: a syndrome register 50; an error detecting unit 51; a syndrome adder 52; a judgment-by-majority unit 53; and a data register 54.

As illustrated in Fig. 6, operation of the first correcting unit 10 is explained referring to Fig. 6. Fig. 6 is an internal block diagram of the first correcting unit and the second correcting unit in Embodiment 1 according to the present invention. Herein, the first correcting unit 10 will now be explained, a second correcting unit 15 mentioned later is, however, as the same.

First, the syndrome register 50 is cleared. Next, a first control information bit (including a parity bit) of an error-correction target is inputted to the syndrome register 50 and the data register 54 while being shifted every bit. The syndrome register 50 is cyclically shifted for eighty nine bits, since the 89-bit reduced codes "184, 102" of difference set cyclic codes "273, 191" are used in the ISDB-T standard.

Next, while the syndrome register 50 and the data registers 54 are shifted for one bit, error-detection (syndrome adding and judgment by majority) on each bit is performed. When an error is detected in any bit, error-correction (bit inversion according to exclusive OR operation) on an output of the data register 54 and an output of the syndrome register 50 is performed. The corrected output of the data register 54 at this time is sequentially outputted as the first control information bit after error-correction.

Finally, after error-detecting and error-correcting on all bits stored on the data register 54 has been completed, bits of the syndrome register 50 are checked. When correct correction is made, each value of bits of the syndrome register 50 must be a value of "0." Otherwise, it is thouht that there is at least one error, and an error detecting flag is outputted. Thus, the first transmission control carriers decoded by the first decoding unit 9 are error-corrected by the first correcting unit 10, and are outputted as the first control information. At this time, the first correcting unit 10 outputs a status of "COMPLETED" as the first decoding flag when the first correcting unit 10 considers that there is no error therein. The first correcting unit 10 outputs the first decoding flag including a status of "INCOMPLETED" when the first correcting unit 10 thinks that there is at least one error.

As mentioned above, the signal demodulating device in Embodiment 1 according to the present invention uses the equalized transmission control carriers equalized by the equalizer 7, and decodes transmission control carriers, thereby obtaining the first control information.

Compensation corresponding to a status of a transmission line has been made on the equalized transmission control carrier by the equalizer 7. Since equalization by the equalizer 7 corresponds to compensation against multipaths and phasing noises, the equalized transmission control carriers have strong toughness against phasing noises.

Since the first decoding unit 9 and the first correcting unit 10 decode the equalized transmission control carriers tough against such phasing noises, the outputted second control information possesses high reliability and accuracy against phasing noises.

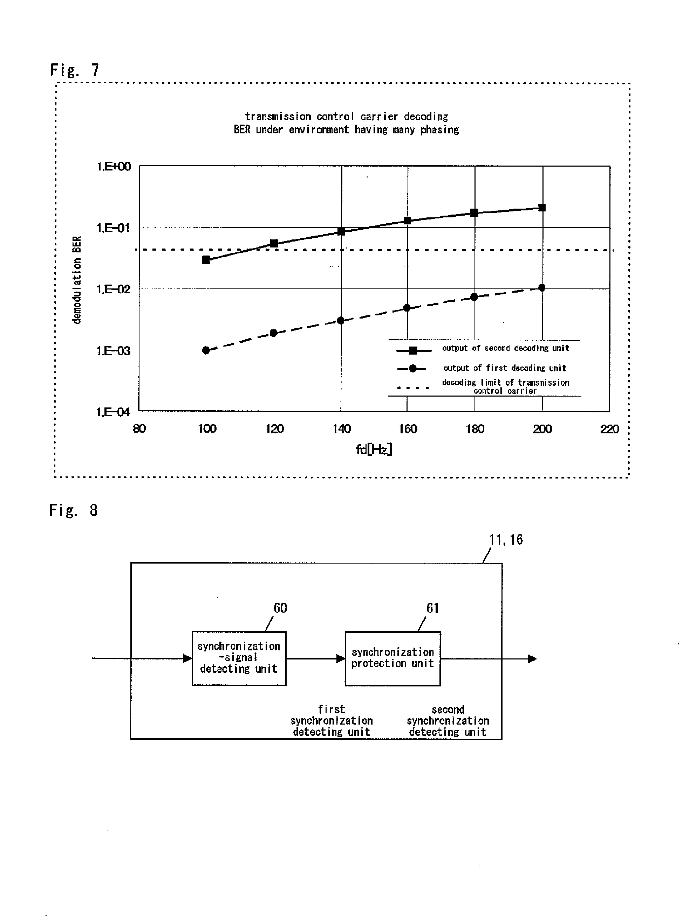

Fig. 7 shows that the first decoding unit 9 using the equalized transmission control carriers possesses strong toughness against phasing noises.

Fig. 7 is a graph illustrating a simulation result of decoding precision in the first decoding unit and the second decoding unit according to the present invention.

Herein, the second decoding unit 14 decodes transmission control carriers that have not been equalized and further that are outputted from the time frequency converting unit 6 as mentioned later.

In the graph of Fig. 7, a vertical axis shows a bit error rate (hereinafter "BER"), and a horizontal axis shows Doppler frequency that imitates environment having many phasing noises. As clear from Fig. 7, the decoding precision of the first decoding unit 9 is higher than the decoding precision of the second decoding unit 14. In particular, when the Doppler frequency exceeds 120[Hz], the second decoding unit 14 exceeds a decoding limit (dotted line in the graph), and in fact decoding transmission control carriers becomes impossible.

Thus, using the equalized transmission control carriers enables the first decoding unit 9 (and the first correcting unit 10) to possess strong toughness against environment having many phasing noises, thereby decoding transmission control carriers with the toughness.

### (first synchronization detecting unit)

A first synchronization detecting unit 11 of Fig. 4 detects a synchronization signal from an output of the first decoding unit 9, and detects frame synchronization.
Fig. 8 is an internal block diagram of the first synchronization detecting unit and the second synchronization detecting unit in Embodiment 1 according to the present invention. Herein, only the first synchronization detecting unit 11 will now be explained, the second synchronization detecting unit 16 mentioned later is, however, as the same. Herein, a frame is one of units of an OFDM signal, and is a unit based on a predetermined number of symbols.

The first synchronization detecting unit 11 is provided with: a synchronization-signal detecting unit 60; and a synchronization protection unit 61. The synchronization-signal detecting unit 60 detects the "synchronization signal" having a specific bit pattern with respect to the first control information outputted from the first decoding unit 9.

The synchronization protection unit 61 checks whether or not a synchronization signal for every frame is detected. When detected, the synchronization protection unit 61 outputs first synchronization information indicating a head position of a frame. The synchronization protection unit 61 outputs a first synchronization flag indicating that the synchronization signal has been detected. The first synchronization flag includes: a status of "DETECTED" indicating that the synchronization signal (the frame synchronization) has been detected; and a status of "UNDETECTED" indicating that the synchronization signal (the frame synchronization) has not been detected.

Herein, the first synchronization detecting unit 11, like the first decoding unit 9, detects frame synchronization based on equalized transmission control carriers equalized by the equalizer 7, and is tough against phasing noise is earned.

The signal demodulating device in Embodiment 1, if needed, is provide with the first synchronization detecting unit 11, thereby detecting frame synchronization with strong toughness against environment having many phasing noises.

### (Embodiment 2)

Next, Embodiment 2 will now be explained referring to Fig. 4.

A signal demodulating device in Embodiment 2 is further provided with: a second decoding unit 14 for decoding transmission control carriers of an output of the time frequency converting unit 6 (namely, before being processed by the equalizer 7); a second correcting unit 15; and a second synchronization detecting unit 16 for detecting frame synchronization.

The equalized transmission control carriers possess a characteristic that are tough against phasing noises, and also possesses a characteristic that may be easily affected by general white noises (so-called Additive White Gaussian Noises, hereinafter "AWGN" as the same as in Figs.), since complex number division according to presumed transmission line characteristic has been performed on the carriers.

On the other hand, transmission control carriers that have not been equalized and further that has been extracted by the time frequency converting unit 6 using FFT or the like possesses a characteristic that may be easily affected by phasing noises and further that may be tough against white noises.

Environment surrounding an electronic device (a mobile phone, a handheld device, a car-mounted television set, a car-mounted terminal, or the like) on which a signal demodulating device has been mounted may randomly change caused by moving or stopping. For this reason, in certain cases, the receiving environment may become environment having many white noises, and in other cases, it may turn into environment having many phasing noises.

The first decoding unit 9, the first correcting unit 10, and the first synchronization detecting unit 11 that use the equalized transmission control carriers explained in Embodiment 1 are tough against phasing noises. The second decoding unit 14, the second correcting unit 15, and the second synchronization detecting unit 16 are tough against white noises.

For this reason, the signal demodulating device in Embodiment 2 can alternatively use decoding transmission control carriers and frame synchronization detection in accordance with change of noise environment.

First, general outlines of the signal demodulating device will now be explained referring to Fig. 4.

The signal demodulating device 1 in Embodiment 2 is provided with: the antenna 2; the tuner 3; the analog-to-digital converter 4; the detecting unit 5; the time frequency converting unit 6; the equalizer 7; the error correcting unit 8; the first decoding unit 9; the first correcting unit 10; the first synchronization detecting unit 11; a control information arbitrating unit 12; a synchronization information arbitrating unit 13; the second decoding unit 14; the second correcting unit 15; and the second synchronization detecting unit 16. Some of these elements may be omitted if needed.

### (outlines)

First, general outlines are explained.

The antenna 2 receives transmission signals including OFDM signals.
The tuner 3 receives a signal of the specific bandwidth included in the received signal, and outputs the signal of the specific bandwidth to the analog-to-digital converter 4.

The analog-to-digital converter 4 converts the analog signal outputted from the tuner 3 into a digital signal, and outputs the digital signal to the detecting unit 5. The detecting unit 5 detects the inputted digital signal, and outputs the detected signal to the time frequency converting unit 6. The time frequency converting unit 6 converts a signal on a time axis into a signal on a frequency axis, and extracts data carriers, transmission control carriers, and pilot carriers that have been multiplexed on the frequency axis. The equalizer 7 presumes a transmission line characteristic according to pilot carriers, and equalizes the data carriers and the transmission control carriers according to the presumed transmission line characteristic.

The error correcting unit 8 corrects an error of the equalized data carriers. The error-corrected data carriers include information of visual and/or audio data, and are finally demodulated in order to reproduce the visual and/or audio data. Thus, the signal demodulating device 1 extracts and demodulates required data from the received OFDM signals.

In parallel with the demodulation of data carriers, the first decoding unit 9 to the second synchronization detecting unit 16 decode transmission control carriers including various kinds of information necessary for the demodulation, and detect frame synchronization.

The first decoding unit 9 and the first correcting unit 10 output the first control information tough against phasing noises, and the second decoding unit 14 and the second correcting unit 15 output the second control information tough against white noises. The second correcting unit 15 outputs a second decoding flag indicating a status of error-correction.

Herein, showing a simulation result, it will now be explained that decoding of the second decoding unit 14 based on the transmission control carriers of an output of the time frequency converting unit 6 is tough against white noises.

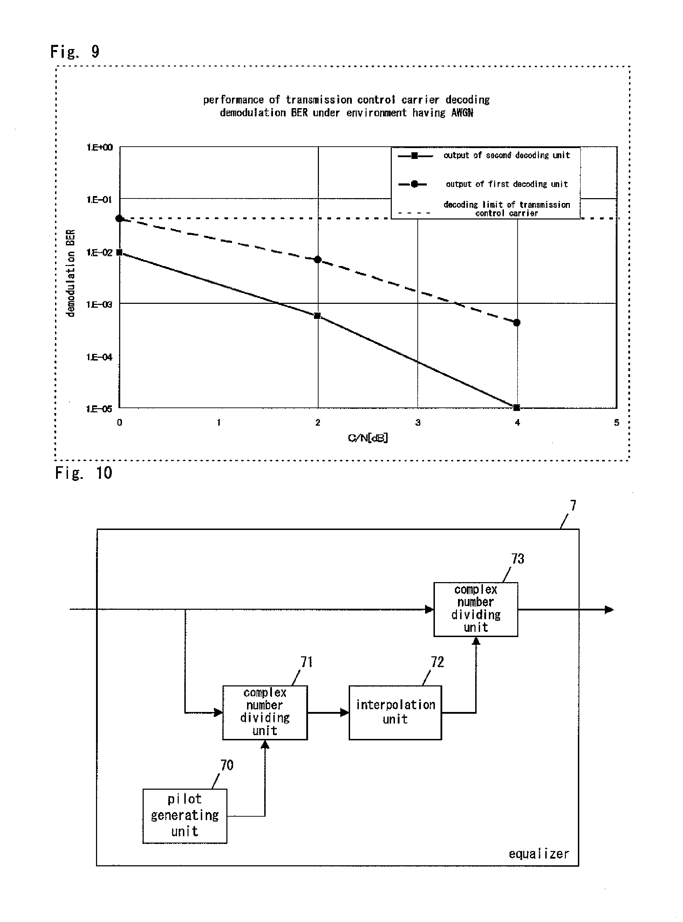

Fig. 9 is a graph illustrating the simulation result of decoding precision of the first decoding unit and the second decoding unit according to the present invention.

In the graph of Fig. 9, a vertical axis shows a BER, and a horizontal axis shows a amount of noises imitating environment having many white noises ("AWGN" is an abbreviation that means a status of white noises). As clear from Fig. 9, decoding precision of the second decoding unit 14 is higher than decoding precision of the first decoding unit 9.

Thus, by means of the second decoding unit 14 (and the second correcting unit 15) using transmission control carriers on which equalization has not been performed, decoding transmission control carriers with strong toughness against environment having many white noises can be performed.

That is, the first decoding unit 9 can perform decoding of transmission control carriers and frame synchronization with strong toughness against environment having many phasing noises, and the second decoding unit 14 can perform decoding of transmission control carriers and frame synchronization with strong toughness against environment having many white noises. Both of them have structures that can complement with each other.

The control information arbitrating unit 12 selects one of the first control information and the second control information based on at least one of the first decoding flag and the second decoding flag.
Since the one with higher decoding precision is selected at this time, the control information is used in a manner that corresponds to change of noise environment.

Similarly, the first synchronization detecting unit 11 outputs the first synchronization information tough against phasing noises and the first synchronization flag indicating a status of frame synchronization detection. The second synchronization detecting unit 16 outputs the second synchronization information tough against white noises and the second synchronization flag indicating a status of frame synchronization detection..

The synchronization information arbitrating unit 13 selects one of the first synchronization information and the second synchronization information based on at least one of the first synchronization flag and the second synchronization flag. Since the one with higher decoding precision is selected at this time, the synchronization information is used in a manner that corresponds to change of noise environment.

As mentioned above, in the signal demodulating device 1 in Embodiment 2, the control information and the synchronization information are used corresponding to change of noise environment. As a result, demodulation of OFDM signals suitable for mobile receiving can be realized.

Next, details of each element will now be explained.

### (antenna)

The antenna 2 receives transmission signals including OFDM signals.

The antenna 2 may be equipped with an electronic device on which the signal demodulating device 1 has been mounted, or may be equipped with a car when the signal demodulating device 1 is mounted on the car.

A plurality of antennas may be provided when performing diversity receiving.

### (tuner)

Based on central frequency according to a broadcast bandwidth, a tuner 3 selects and receives a specific bandwidth for the OFDM signals received by the antenna 2.

The tuner 3 outputs the received OFDM signals as received signals to the analog-to-digital converter 4.

When a difference between frequency used by the tuner 3 and frequency used by the detecting unit 5 exists, compensation of a frequency offset amount may be performed.

### (analog-to-digital converter)

The analog-to-digital converter 4 converts the analog signal from the tuner 3 into a digital signal. The analog-to-digital converter 4 has resolution according to specification of the signal demodulating device 1.

The analog-to-digital converter 4 outputs converted digital signal to the detecting unit 5.

### (detecting unit)

The detecting unit 5 detects the digital signal outputted from the analog-to-digital converter 4. The detecting unit 5 outputs the detected signal to the time frequency converting unit 6.

The detecting unit 5 detects the digital signal by means of orthogonal detection.

### (time frequency converting unit)

The time frequency converting unit 6 converts the output of the detecting unit 5 from the signal on a time axis into the signal on a frequency axis. FFT is a typical example used for the unit. The unit may be a unit having a function of converting a signal on a time axis into a signal on a frequency axis other than the FFT. For example, the time frequency converting unit 6 may use fractal or other algorithms.

The time frequency converting unit 6 converts the output of the detecting unit 5 from a signal on a time axis into a signal on a frequency axis, thereby extracting data carriers, transmission control carriers, and pilot carriers that have been are multiplexed on the frequency axis. As for OFDM signals, each carrier has been orthogonally multiplexed.

The time frequency converting unit 6 outputs the extracted data carriers or the like to the equalizer 7 and the second decoding unit 14.

Since the time frequency converting unit 6 performs time frequency conversion in response to the output of the detecting unit 5, the time frequency converting unit 6 preferably also has a function of adjusting an extracting range (window position) thereof.

Fig. 2 typically shows OFDM signals extracted by this time frequency converting unit 6.

In Fig. 2, a horizontal axis is a frequency axis, and a vertical axis is a time axis. Each symbol of "O" in Fig. 2 shows a respective carrier included in a carrier group. Each carrier has been multiplexed on the frequency axis. A plurality of multiplexed carriers are further multiplexed on the time axis.

As clear from Fig. 2, there are included the data carriers on which visual and/or audio data have been modulated, pilot carriers and transmission control carriers.

### (equalizer)

The equalizer 7 performs phase control on the data carriers and the transmission control carriers based on the pilot carriers. The equalizer 7 calculates a reliability value indicating a receiving status.

Referring to Fig. 10, the equalizer 7 will now be explained. Fig. 10 is an internal block diagram of the equalizer in Embodiment 2 according to the present invention.

The equalizer 7 is provided with: a pilot generating unit 70; a complex number dividing unit 71; an interpolation unit 72; and a complex number dividing unit 73.

The phase and amplitude of pilot carriers are known. The equalizer 7 performs complex number division on received pilot carrier with the known pilot carrier, and calculates a displacement amount of phase and amplitude of the received pilot carrier. A status of the transmission line is presumed based on the calculated displacement amount.

The pilot generating unit 70 generates a pilot carrier with the known amplitude and phase, and the complex number dividing unit 71 performs complex number division of the received pilot carrier with the generated pilot carrier.

The interpolation unit 72 superimposes results of the complex number division with respect to a plurality of pilot carriers to calculate an average value, thereby obtaining an optimal transmission line characteristic in signal-receiving.

The complex number dividing unit 73 performs complex number division on the data carriers and transmission control carriers outputted from the time frequency converting unit 6 with the calculated transmission line characteristic, and equalizes the data carriers and the transmission control carriers. Demodulation precision of the equalized data carrier and equalized transmission control carrier is improved, because the transmission line characteristic has been taken into consideration as mentioned above.

The equalizer 7 outputs the equalized data carriers to the error correcting unit 8, and outputs the equalized transmission control carriers to the first decoding unit 9.

### (error correcting unit)

The error correcting unit 8 corrects errors included in the digital data of the demodulated data carriers and the data carriers.

According to Viterbi decoding, Reed-Solomon decoding, or the like, the error correcting unit 8 detects and corrects an error of the data carriers and other data. The digital error-corrected data are outputted as packet data concerning visual and/or audio contents.

### (first decoding unit, first correcting unit, and first synchronization detecting unit)

The first decoding unit 9 and the first correcting unit 10 decode and error-correct equalized transmission control carriers, and output the first control information as explained in Embodiment 1.

As explained in Embodiment 1, the first synchronization detecting unit 11 detects frame synchronization based on the decoding result of the equalized transmission control carriers, and outputs the first synchronization information.

### (second decoding unit, second correcting unit, and second synchronization detecting unit)

The second decoding unit 14 decodes the transmission control carriers that have not been equalized. The decoding function is the same as that of the first decoding unit 9, and is configured using a structure illustrated in Fig. 11.

Fig. 11 is an internal block diagram of the second decoding unit in Embodiment 2 according to the present invention.

The second decoding unit 14 is provided with: a differential decoding unit 30; a cumulative adder 31; and a polarity judging unit 32.

The differential decoding unit 30 performs differential decoding on transmission control carriers. According to the differential decoding, there is judged (positive or negative) polarity that the transmission control carriers exist on an orthogonal plane. The cumulative adder 31 accumulates results of the differential decoding unit 30 with respect to a plurality of transmission control carriers.

The polarity judging unit 32 determines the (positive or negative) polarity of the transmission control carriers based on the accumulated results.

In the ISDB-T standard, transmission control carriers exist in a positive position or a negative position on the orthogonal plane (that is, I/Q plane).

The second correcting unit 15 possesses the same structure and function as the first correcting unit 10 explained in Embodiment 1. The second correcting unit 15 error-corrects an output of the second decoding unit 14, and outputs the error-corrected second control information. In addition, the second correcting unit 15 outputs a second decoding flag including a "COMPLETED" status indicating that error-correction on the second control information has been correctly completed, and a "INCOMPLETED" status indicating that error-correction on the second control information has not been correctly completed.

The second synchronization detecting unit 16 possesses the same structure and function as those of the first synchronization detecting unit 11 explained in Embodiment 1. The second synchronization detecting unit 16 detects frame synchronization based on the second control information outputted from the second decoding unit 14. After the detection, the second synchronization detecting unit 16 outputs the second synchronization information indicating a head position of a frame. The second synchronization detecting unit 16 outputs a second synchronization flag indicating that the synchronization signal can be detected (frame synchronization can be detected). The second synchronization flag includes a status of "DETECTED" indicating that frame synchronization has been detected, and a status of "UNDETECTED" indicating that frame synchronization has not be detected.

Herein, the difference between the characteristic of the first decoding unit 9 and the characteristic of the second decoding unit 14 is shown as the simulation results of Fig. 7 and Fig. 9.

The first decoding unit 9 is tough against environment having many phasing noises, and the second decoding unit 14 is tough against environment having many white noises.

### (control information arbitrating unit)

The control information arbitrating unit 12 selects one of the first control information and the second control information based on at least one of the first decoding flag and the second decoding flag.

The control information arbitrating unit 12 receives the first control information and the first decoding flag from the first correcting unit 10. In addition, the control information arbitrating unit 12 receives the second control information and the second decoding flag from the second correcting unit 15.

As above-mentioned, the first decoding flag includes a status of "COMPLETED" indicating that error-correction on the first control information has been correctly performed, and a status of "INCOMPLETED" indicating that error-correction on the first control information has not been correctly performed. The second decoding flag includes a status of "COMPLETED" indicating that error-correction on the second control information has been correctly performed, and a status of "INCOMPLETED" indicating that error-correction on the second control information has not been correctly performed.

That is, each of the first decoding flag and the second decoding flag is an index indicating precision of decoding corresponding transmission control carriers and precision of the frame synchronization.

The control information arbitrating unit 12 selects one of the first control information and the second control information based on this first decoding flag and second decoding flag.

The control information arbitrating unit 12 outputs the selected control information to the error correcting unit 8 and other elements needed for signal demodulation.

Thus, selection of the control information arbitrating unit 12 causes to use control information with high decoding precision.

### (synchronization information arbitrating unit)

The synchronization information arbitrating unit 13 selects one of the first synchronization information and the second synchronization information.

The synchronization information arbitrating unit 13 receives first synchronization information from the first synchronization detecting unit 11, and receives the first decoding flag from the first correcting unit 10. In addition, the synchronization information arbitrating unit 13 receives the second synchronization information from the second synchronization detecting unit 16, and receives the second decoding flag from the second correcting unit 15.

The synchronization information arbitrating unit 13 selects one of the first synchronization information and the second synchronization information based on the first synchronization flag and the second synchronization flag.

The synchronization information arbitrating unit 13 outputs the selected control information to the error correcting unit 8 and other elements needed for signal demodulation.

Thus, selection of the synchronization information arbitrating unit 13 causes to use synchronization information with high detecting precision (frame synchronization).

Herein, as clear from the simulation results of Figs. 7 and 9, the first control information and the first synchronization information are tough against environment having many phasing noises, and the second control information and the second synchronization information are tough against environment having many white noises.

The control information arbitrating unit 12 can select control information with high decoding precision based on the first decoding flag and the second decoding flag, which indicate whether or not corresponding error-correction has been correctly performed to directly show decoding precision, namely as the indexes of the decoding precision. Similarly, the synchronization information arbitrating unit 13 can select synchronization information with high detecting precision based on the first synchronization flag and the second synchronization flag, which indicate whether or not corresponding frame synchronization has been correctly completed to directly show the detecting precision, namely as the indexes of the detecting precision.

Selection according to the above items may be performed at any time, or may be performed serially as time goes by (of course, performing every fixed cycle is available). That is, selection of the control information and synchronization information is performed flexibly corresponding to noise environment even when the environment changes every moment. As a result, there can be realized the signal demodulating device 1 that can perform the demodulating with toughness against change of noise environment.

### (Embodiment 3)

Next, Embodiment 3 will now be explained.

In Embodiment 3, there will be explained various examples of selection process in the control information arbitrating unit 12 and the synchronization information arbitrating unit 13.

### (Example 1)

The control information arbitrating unit 12 selects control information corresponding to a flag including a status of "COMPLETED" among the first control information and the second control information upon receiving the first decoding flag and the second decoding flag.

For example, when the first decoding flag is a status of "COMPLETED" and the second decoding flag is a status of "INCOMPLETED", the control information arbitrating unit 12 selects the first control information that is control information corresponding to the first decoding flag. On the contrary, when the first decoding flag is a status of "INCOMPLETED" and the second decoding flag is a status of "COMPLETED", the control information arbitrating unit 12 selects the second control information that is control information corresponding to the second decoding flag.

The synchronization information arbitrating unit 13 selects synchronization information corresponding to a flag including a status of "DETECTED" among the first synchronization information and the second synchronization information upon receiving the first synchronization flag and the second synchronization flag.

For example, when the first synchronization flag is a status of "DETECTED" and the second synchronization flag is a status of "UNDETECTED", the synchronization information arbitrating unit 13 selects the first synchronization information that is synchronization information corresponding to the first synchronization flag. On the contrary, when the first synchronization flag is a status of "UNDETECTED" and the second synchronization flag is a status of "DETECTED", the synchronization information arbitrating unit 12 selects the second synchronization information that is synchronization information corresponding to the second synchronization flag.

Thus, in accordance with "COMPLETED" and "INCOMPLETED" statuses of the first decoding flag and the second decoding flag, the signal demodulating device 1 can easily and certainly use control information with high decoding precision. Similarly, in accordance with "DETECTED" and "UNDETECTED" statuses of first synchronization flag and the second synchronization flag, the signal demodulating device 1 can easily and certainly use synchronization information with high detecting precision.

### (Example 2)

Next, Example 2 will now be explained.

When both of the received first decoding flag and the received second decoding flag indicate the same status ( both flags indicate "COMPLETED" statuses, or "INCOMPLETE" statuses), the control information arbitrating unit 12 selects immediately before selected control information among the first control information and the second control information.

For example, when the received first decoding flag and the received second decoding flag are "INCOMPLETED" statuses and the first control information is immediately before selected, the control information arbitrating unit 12 selects the first control information. When the received first decoding flag and the received second decoding flag are "COMPLETED" statuses and the second control information is immediately before selected, the control information arbitrating unit 12 selects the second control information.

When both of the received first synchronization flag and the received second synchronization flag indicate the same status (both flags indicate "DETECTED" statuses, or "UNDETECTED" statuses), the synchronization information arbitrating unit 13 selects immediately before selected synchronization information among the first synchronization information and the second synchronization information.

For example, when the received first synchronization flag and the received second synchronization flag are "UNDETECTED" statuses and the first synchronization information is immediately before selected, the synchronization information arbitrating unit 13 selects the first synchronization information. When both of the received first synchronization flag and the received second synchronization flag are "DETECTED" statuses and the second synchronization information is immediately before selected, the synchronization information arbitrating unit 13 selects the second synchronization information.

Thus, the immediately before selected control information and synchronization information, in other words, the most suitable control information and synchronization information is selected.

### (Example 3)

Next, Example 3 will now be explained.

The control information arbitrating unit 12 measures a number of flags indicating a status of "COMPLETED" among the first decoding flag and the second decoding flag within a predetermined period. After the measurement, the control information arbitrating unit 12 selects control information corresponding to flags with the more number of "COMPLETED".

For example, within the predetermined period, when the number of the first decoding flags indicating a status of "COMPLETED" is ten and a number of the second decoding flags as the same is fourteen, the control information arbitrating unit 12 selects the second control information corresponding to the second decoding flag. On the contrary, when the number of the first decoding flags indicating a status of "COMPLETED" is twenty and a number of the second decoding flags as the same is ten, the control information arbitrating unit 12 selects the first control information corresponding to the first decoding flag.

The synchronization information arbitrating unit 13 measures a number of flags indicating a status of "DETECTED" among the first synchronization flag and the second synchronization flag within a predetermined period. After the measurement, the synchronization information arbitrating unit 13 selects the synchronization information corresponding to flags with the more number of "DETECTED".

For example, within the predetermined period, when the number of first synchronization flags indicating a status of a "DETECTED" is ten and the number of the second synchronization flags as the same fourteen, the synchronization information arbitrating unit 13 selects the second synchronization information corresponding to the second synchronization flags. On the contrary, when the number of the first synchronization flags indicating a status of "DETECTED" is twenty and the number of the second synchronization flags as the same is ten, the synchronization information arbitrating unit 13 selects the first synchronization information corresponding to the first synchronization flags.

Thus, signal demodulation with higher precision can be realized by selecting the control information and synchronization information corresponding to flags indicating a status of "COMPLETED" or "DETECTED" within the predetermined period.

Selection according to an arbitrary combination of Example 1 to Example 3 may be made.

### (others)

Referring to Fig. 12, improvement of precision when calculating the first decoding flag, the second decoding flag, the first synchronization flag, and the second synchronization flag will now be explained.

Fig. 12 is a diagram of flag selection in Embodiment 3 according to the present invention.

The first decoding flag indicates a status of "COMPLETED" when first control information of a current frame agrees with first control information of a frame previous to the current frame on a time axis, and the first decoding flag indicates a status of "INCOMPLETED" when the first control information of the current frame disagrees with first control information of a frame previous to the current frame on the time axis.

The control information arbitrating unit 12 may select control information based on the decoding flag based on comparison with the control information of a separate frame on the time axis in this way. Alternatively, after improving precision of the first decoding flag by adding an agreed/disagreed item of information to the first decoding flag, the control information arbitrating unit 12 may use the improved first decoding flag.

As illustrated in Fig. 12, an output signal of the first decoding unit 9 is first inputted into the first correcting unit 10 and a frame delaying unit 35. The frame delaying unit 35 delays the first control information for one frame. A comparator 36 compares the directly entered first control information (the first control information of the present frame) with the one frame-delayed first control information (the first control information of a previous frame on a time axis). The comparator 36 outputs an agreed flag when two items of control information agree, and outputs a disagreed flag when the two items of control information disagree. The agreed flag corresponds to a status of "COMPLETED" of the first decoding flag, and the disagreed flag corresponds to a status of "INCOMPLETED" of the first decoding flag.

The first correcting unit 10 error-corrects the first control information of the present frame, and outputs a first decoding flag indicating an error-correction status. The first decoding flag is outputted to a flag selecting unit 37.

The flag selecting unit 37 selects the first decoding flag outputted from the first correcting unit 10, and outputs the selected one to the control information arbitrating unit 12. As explained in Embodiments 1 to 3, the control information arbitrating unit 12 selects one of the first control information or the second control information based on the first decoding flag and the second decoding flag.

Alternatively, the flag selecting unit 37 may output the agreed/disagreed flag outputted from the comparator 36 to the control information arbitrating unit 12 as a flag equivalent to the first decoding flag. At this time, the agreed flag corresponds to a status of "COMPLETED", and the disagreed flag corresponds to a status of "UNCOMPLETED." That is, the control information arbitrating unit 12 can use the agreed/disagreed flag as the standard of selection from the first control information and the second control information. In other words, the control information arbitrating unit 12 can judge that the reliability of the first decoded control information is low when the first control information decoded with respect to the present frame and the first control information decoded with respect to a previous frame on a time axis disagree. Upon judging that the reliability is low, the control information arbitrating unit 12 does not select this first control information, but may select the second control information.

Similarly, a status of the second control information may be shown according to the agreed/disagreed flag generated according to comparison the second control information of the present frame with the second control information of a previous frame on a time axis.

The above is the same as the first synchronization flag and the second synchronization flag.

Masking the first decoding flag outputted from the first correcting unit 10 with a flag outputted from the comparator 36 enables to add a status of the first decoding flag of a past frame to the first decoding flag of the present frame, thereby performing selection process with higher precision.

### (Embodiment 4)

Next, Embodiment 4 is explained.

Each function of the signal demodulating device explained in Embodiments 1 to 3 may be implemented with hardware or software. Furthermore, each function may be implemented with the combination of hardware and software.

Fig. 13 is a block diagram of a device for realizing a signal demodulating method in Embodiment 4 according to the present invention.

Based on transmission signals received by the antenna 2, the tuner 3 tunes specific bandwidth to receive a received signal.

A processor 58 realizes each function included in the signal demodulating device according to calculation process. At this time, the processor 58 performs signal demodulation according to a program stored on an ROM 59.

The processor 58 is composed of a CPU and/or a DSP. In Fig. 13, only the antenna 2 and the tuner 3 are illustrated as hardware elements. The tuner 3 may be, however, implemented with software.

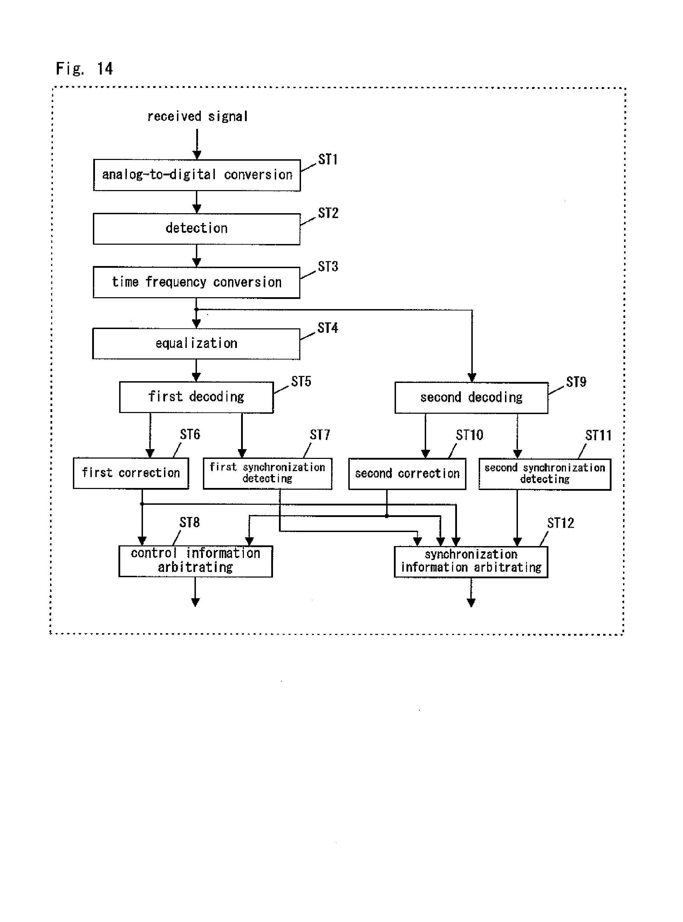

The processor 58 reads the program stored on the ROM 59, performs calculation according to process procedures defined in the program, thereby performing signal demodulation. Referring to Fig. 14, the flow of the signal demodulation that the processor 58 performs will now be explained. Fig. 14 is a flow chart of a signal demodulating method in Embodiment 4 according to the present invention.

First, at Step ST1, the processor 58 converts the received signal of an analog signal into a digital signal. Next, at Step ST2, the processor 58 detects the converted digital signal. Orthogonal detection is used for the detection.

Next, the processor 58 converts the detected digital signal on a time axis into the signal on a frequency axis at Step ST3. An output of Step ST3 is transmitted to Step ST4 and Step ST9. Converting into the signal of the frequency axis causes to extract the data carriers, pilot carrier, and transmission control carriers that have been multiplexed on the frequency axis.

At Step ST9, the transmission control carriers extracted when having been converted into the signal on a frequency axis are decoded, and the second control information is obtained. At Step ST10, error-correction on the second control information is performed, the error-corrected second control information and a second decoding flag indicating a status of the error-correction are outputted. Similarly, at Step ST11, based on the second control information, the processor 58 detects frame synchronization, and outputs the second synchronization information and a second synchronization flag indicating a status of the frame synchronization detection.

At Step ST4, the processor 58 equalizes OFDM signals converted into signals on a frequency axis. The processor 58 outputs equalized transmission control carriers to the following step ST5 by the equalization. Steps ST5 to ST7 are performed in parallel to the above-mentioned steps ST9 to ST11.

At Step ST5, the processor 58 decodes the equalized transmission control carriers, and outputs the first control information. Next, at Step ST6, the processor 58 error-corrects the first control information, and outputs the error-corrected first control information and a first decoding flag indicating a status concerning the error-correction. At Step ST7, the processor 58 detects frame synchronization based on the first control information, and outputs the first synchronization information and a first synchronization flag indicating a status of the frame synchronization detection.

The first decoding flag, the second decoding flag, the first control information, and the second control information are used at Step ST8. At Step ST8, the processor 58 selects one of the first control information and the second control information based on the first decoding flag and the second decoding flag.

The first synchronization flag, the second synchronization flag, the first synchronization information, and the second synchronization information are used at Step ST12. At Step ST12, the processor 58 selects one of the first synchronization information and the second synchronization information based on the first synchronization flag and the second synchronization flag.

Herein, the selection process in Step ST8 and Step ST12 is the same as explained in Embodiment 3.

According to the above-mentioned signal demodulating method, the second control information and the second synchronization information tend to be easily selected in environment having many white noises (herein, the second control information and the second synchronization information is tough against to environment having many white noises). The first control information and the first synchronization information tend to be easily selected in environment having many phasing noises (herein, the first control information and the first synchronization information is tough against environment having many phasing noises).

As a result, decoding control information and frame synchronization detection optimally corresponding to noise environment even when the environment changes every moment can be realized.

A part of elements for steps illustrated in Fig. 14 may be implemented with hardware rather than software according to a program.
Process of each element is the same as the functions and process explained in Embodiments 1 to 3.

### (Embodiment 5)

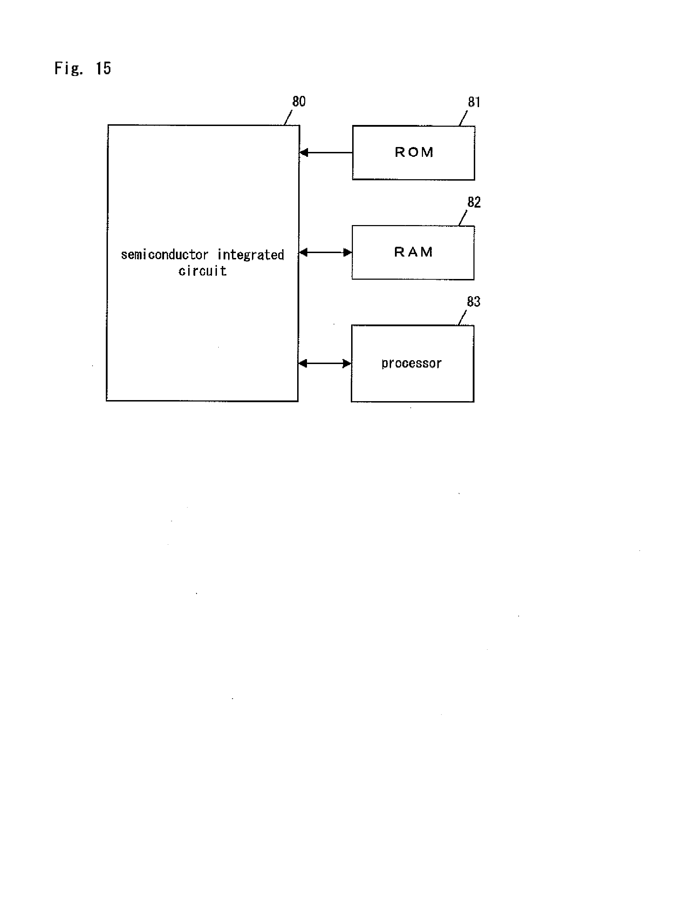

Next, referring to Fig. 15, Embodiment 5 will now be explained.

Embodiment 5 explains cases where all or a part of a signal demodulating device is composed of a semiconductor integrated circuit. Fig. 15 is a block diagram of a semiconductor integrated circuit in Embodiment 5 according to the present invention.

A semiconductor integrated circuit 80 is provided with the elements explained in Embodiments 1 to 3. That is, the semiconductor integrated circuit 80 includes circuits for: a tuner function; an analog-to-digital conversion function; a detection function; a time-frequency-conversion function; an equalization function; an error-correction function; a first decoding function; a first correction function; a first synchronization detecting function; a second decoding function; a second correction function; a second synchronization detection function; a control information arbitrating function; and a synchronization information arbitrating function. Each function is the same as explained in Embodiments 1 to 3.

The semiconductor integrated circuit 80 decodes transmission control carriers extracted by the time frequency conversion, and obtains the second control information and the second synchronization information. The semiconductor integrated circuit 80 decodes the equalized transmission control carrier, and obtains the first control information and the first synchronization information. According to the indexes (the first decoding flag and the second decoding flag) indicating decoding precision, the semiconductor integrated circuit selects and uses one of the first control information and the second control information. Similarly, according to the indexes (the first synchronization flag and the second synchronization flag) indicating detecting precision, the semiconductor integrated circuit selects and uses one of the first synchronization information and the second synchronization information. The first control information and the first synchronization information are tough against environment having many phasing noises. The second control information and the second synchronization information are tough against environment having many white noises.

As a result, the semiconductor integrated circuit 80 can perform signal demodulation optimally corresponding to change of noise environment every moment.

Selection process of the control information and the synchronization information is the same as explained in Embodiment 3. A part of functions may be implemented with software executed by the processor 83.

As illustrated in Fig. 15, the semiconductor integrated circuit 80 may be connected to an ROM 81, an RAM 82, and the processor 83, thereby performing necessary control and using the result of modulation.

### (Embodiment 6)

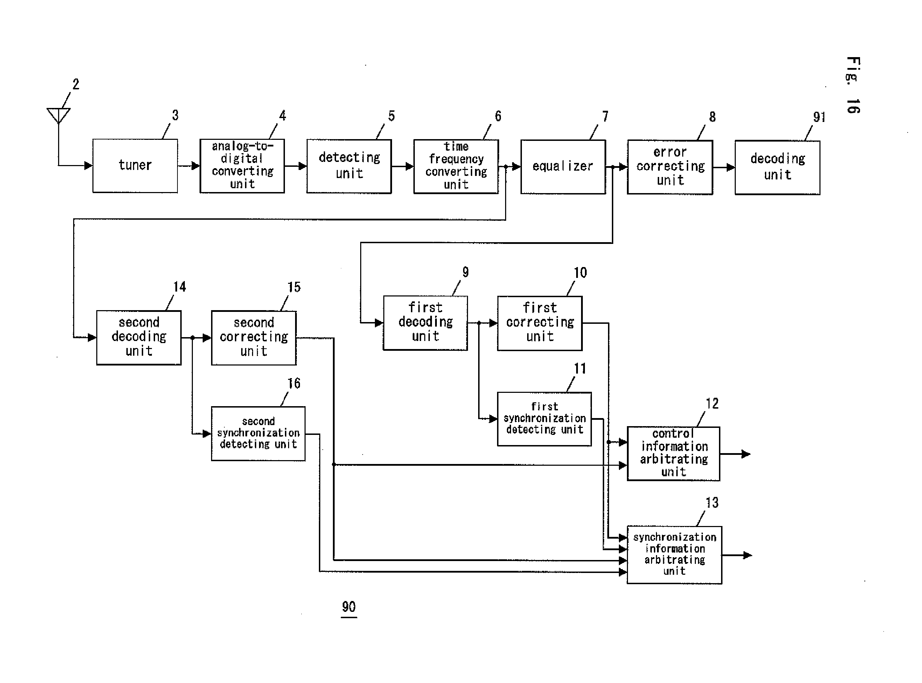

Next, referring to Fig. 16, Embodiment 6 will now be explained.

Embodiment 6 explains a receiving apparatus provided with the signal demodulating device 1 explained in Embodiments 1 to 3.

Fig. 16 is a block diagram of a receiving apparatus in Embodiment 6 according to the present invention.

Elements attached with the same symbols as Fig. 4 are the same as those of Embodiments 1 to 3.

In the receiving apparatus 90, a decoding unit 91 is added to the signal receiving apparatus 1 explained in Fig. 4.

The decoding unit 91 decodes the data carriers outputted from the error correcting unit 8, extracts visual and/or audio information included in data carriers, and can reproduce the extracted information. Although not illustrated in Fig. 16, a display device, a speaker, or the like are preferably further provided, thereby enabling to display images and to reproduce voices.

Since the receiving apparatus 90 explained in Embodiment 6 also possesses the functions of the signal demodulating device explained in Embodiments 1 to 3, thereby performing the signal demodulation optimally corresponding to change of noise environment every moment. As a result, there can be performed receiving OFDM signals with strong toughness against change of noise environment.

The receiving apparatus is preferably mounted on electronic devices, such as a mobile phone, a handheld device, a PDA, a car navigation system, a car-mounted television set, and a car-mounted terminal. This is because these apparatuses may perform reproduction of television broadcasting or radio broadcasting in response to OFDM signals.

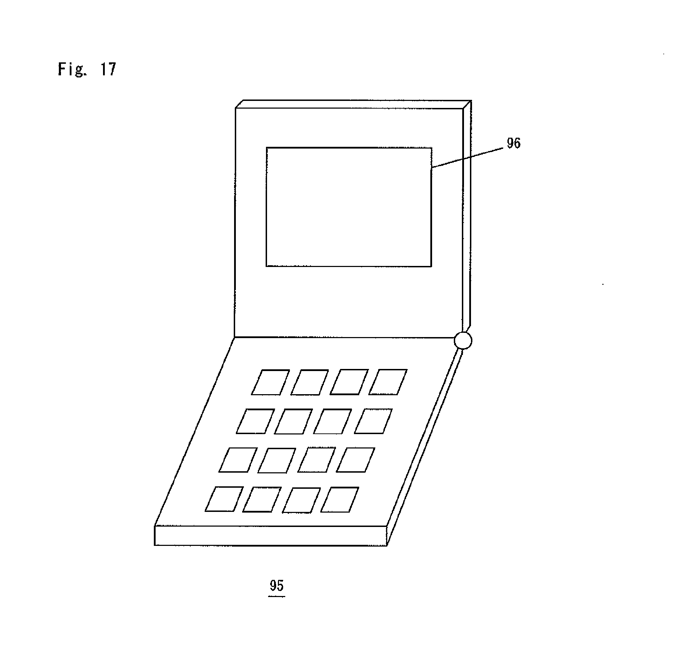

For example, as illustrated in Fig. 17, the apparatus may be mounted on a mobile phone. Fig. 17 is a perspective view of a mobile phone in Embodiment 6 according to the present invention. A mobile phone 95 is provided with a display device 96. The mobile phone 95 is provided with the receiving apparatus explained with Fig. 16.

The mobile phone 95 receives signals including OFDM signals. The mobile phone 95 performs the signal demodulation explained in Embodiments 1 to 3. Finally, the mobile phone 95 displays images with the display device 96, or reproduces voices with a speaker.

Also in this case, since the signal demodulation explained in Embodiments 1 to 4 is performed, signal receiving optimally corresponding to change of noise environment can be performed.

The mobile phone 95 is an example of the electronic devices on which the receiving apparatus can be mounted. In addition to a non-portable television set, Audio/Visual equipment, a computer, or the like, the signal modulation device can be used for a mobile terminal (a handheld device, a mobile phone, a car-mounted television set, a car navigation system, a portable television set, a portable radio, and notebook computer).

The signal demodulating device, the signal demodulating method, the semiconductor integrated circuit, and the receiving apparatus according to the present invention optimally correspond to demodulation of not only the OFDM signals based on the ISDB-T standard but also other frequency division multiplexing signals.

Herein, transmission control carriers according to the ISDB-T standard may include at least one of: FFT sampling-number information of frequency division multiplexing signals represented by OFDM signals; guard-interval-length information; and symbol-length information. In standards other than the ISDB-T standard, transmission control carriers may include at least one of: modulation-demodulation-method information of frequency division multiplexing signals (transmitted signals); communication-method information; and transmission-method information. In signal transmission in standards with respect to terrestrial broadcasting, transmission signals include various control information and mode information, and the signal demodulating device analyzes this control information and mode information, and can perform signal receiving and demodulation. Herein, the mode information includes at least one of: modulation-demodulation-method information; communication-method information; and the transmission-method information.

The modulation-demodulation-method information includes an item of a method, such as QPSK, BPSK, 16QAM, and 64QAM. The communication-method information and the transmission-method information include a value of a carrier frequency, a transmission bandwidth, or the like.

Thus, the signal demodulating device, the signal demodulating method, the semiconductor integrated circuit, and the receiving apparatus can demodulate, using at least one of: the modulation-demodulation-method information; the communication-method information; and the transmission-method information, received signals corresponding to transmission signals of various standards.

The signal demodulating device explained in Embodiments 1 to 6, the signal demodulating method, the semiconductor integrated circuit, and the receiving apparatus are related to mere examples according to the present invention. The present invention includes modification and/or reconstruction thereof within the scope of the present invention.

### [Industrial Applicability]

The present invention can be preferably used, for example, in a field of a signal demodulating device used for a handheld device or a mobile terminal that receives digital terrestrial television services, a field of a receiving-apparatus field of the same, or the like.

## Claims

1. A signal demodulating device, comprising:
a time frequency converting unit operable to convert a frequency division multiplexing signal on a time axis into a signal on a frequency axis to output a data carrier, a pilot carrier, and a transmission control carrier;
an equalizer operable to equalize the data carrier and the transmission control carrier according to a characteristic value of a transmission line obtained from the pilot carrier to output an equalized data carrier and an equalized transmission control carrier;
a first decoding unit operable to decode the equalized transmission control carrier; and
a first correcting unit operable to perform first error-correction on an output of said first decoding unit to output first control information and a first decoding flag that indicates a status of the first error-correction.

2. A signal demodulating device as defined in claim 1, further comprising:
a second decoding unit operable to decode the transmission control carrier outputted from said time frequency converting unit;
a second correcting unit operable to perform second error-correction on an output of said second decoding unit to output second control information and a second decoding flag that indicates a status of the second error-correction; and
a control information arbitrating unit operable to alternatively select one of the first control information and the second control information based on at least one of the first decoding flag and the second decoding flag.

3. A signal demodulating device as defined in claim 2, further comprising:
a first synchronization detecting unit operable to perform first frame synchronization detection based on an output of said first decoding unit to output first synchronization information and a first synchronization flag that indicates a status of the first frame synchronization detection;
a second synchronization detecting unit operable to perform second frame synchronization based on an output of said second decoding unit to output second synchronization information and a second synchronization flag that indicates a status of the second frame synchronization detection; and
a synchronization information arbitrating unit operable to alternatively select one of the first synchronization information and the second synchronization information based on at least one of the first synchronization flag and the second synchronization flag.

4. A signal demodulating device as defined in claim 3, wherein:
the first decoding flag includes a status of "COMPLETED" indicating that the first error-correction related to the first control information has been performed correctly, and a status of "INCOMPLETED" indicating that the first error-correction has not been performed correctly;
the second decoding flag includes a status of "COMPLETED" indicating that the second error-correction related to the second control information has been performed correctly, and a status of "INCOMPLETED" indicating that the second error-correction has not been performed correctly; and
each of the first synchronization flag and the second synchronization flag includes a status of "DETECTED" indicating that frame synchronization has been completed, and a status of "UNDETECTED" indicating that frame synchronization has not been completed.

5. A signal demodulating device as defined in claim 4, wherein:
said control information arbitrating unit selects first one of the first control information and the second control information, the first one corresponding to the status of "COMPLETED"; and
said synchronization information arbitrating unit selects second one of the first synchronization information and the second synchronization information, the second one corresponding to the status of "DETECTED".

6. A signal demodulating device as defined in claim 4, wherein:
said control information arbitrating unit selects previously selected one of first control information and said second control information when the first decoding flag and the second decoding flag indicate the same level status;
said synchronization information arbitrating unit selects previously selected one of the first synchronization information and the second synchronization information when the first synchronization flag and the second synchronization flag indicate the same level status.

7. A signal demodulating device as defined in claim 4, wherein:
said control information arbitrating unit measures a first number of statuses indicating "COMPLETED" of the first decoding flag and a second number of statuses indicating "COMPLETED" of the second decoding flag within a predetermined period;
said synchronization information arbitrating unit selects the more of the first number and the second number, and selects control information corresponding to the more among the first control information and the second control information control information;
said synchronization information arbitrating unit measures a third number of statuses indicating "DETECTED" of the first synchronization flag and a fourth number of statuses indicating "DETECTED" of the second synchronization flag within a predetermined period; and
said synchronization information arbitrating unit selects the more of the third number and the fourth number, and selects synchronization information corresponding to the more among the first synchronization information and the second synchronization information.

8. A signal demodulating device as defined in claim 4, wherein:
said first decoding flag indicates a status of "COMPLETED" when first control information of a current frame agrees with first control information of a frame previous to the current frame on a time axis;
said first decoding flag indicates a status of "INCOMPLETED" when the first control information of the current frame disagrees with first control information of a frame previous to the current frame on the time axis;
said second decoding flag indicates a status of "COMPLETED" when second control information of the current frame agrees with second control information of a frame previous to the current frame on the time axis; and
said second decoding flag indicates a status of "INCOMPLETED" when the second control information of the current frame disagrees with second control information of a frame previous to the current frame on the time axis.

9. A signal demodulating device as defined in claim 1, further comprising:
a tuner operable to receive a signal belonging to a specific bandwidth among a received signal including the frequency division multiplexing signal to output an analog signal;
an analog-to-digital converter operable to convert the analog signal into a digital signal;
a detecting unit operable to detect the digital signal to output a detected signal to said time frequency converting unit; and
an error correcting unit operable to perform error-correction on the equalized data carrier.

10. A signal demodulating method, comprising:
converting a frequency division multiplexing signal on a time axis into a signal on a frequency axis to output a data carrier, a pilot carrier, and a transmission control carrier;
equalizing the data carrier and the transmission control carrier according to a characteristic value of a transmission line obtained from the pilot carrier to output an equalized data carrier and an equalized transmission control carrier;
first decoding the equalized transmission control carrier; and
performing first error-correction on an output of said first decoding to output first control information and a first decoding flag that indicates a status of the first error-correction.

11. A signal demodulating method as defined in claim 10, further comprising:
second decoding the transmission control carrier outputted in said converting;
performing second error-correction on an output of said second decoding to output second control information and a second decoding flag that indicates a status of the second error-correction; and
alternatively selecting one of the first control information and the second control information based on at least one of the first decoding flag and the second decoding flag.

12. A signal demodulating method as defined in claim 11, further comprising:
performing first frame synchronization detection based on an output of said first decoding to output first synchronization information and a first synchronization flag that indicates a status of the first frame synchronization detection;
performing second frame synchronization based on an output of said second decoding to output second synchronization information and a second synchronization flag that indicates a status of the second frame synchronization detection; and
alternatively selecting one of the first synchronization information and the second synchronization information based on at least one of the first synchronization flag and the second synchronization flag.

13. A signal demodulating method as defined in claim 12, wherein:
the first decoding flag includes a status of "COMPLETED" indicating that the first error-correction related to the first control information has been performed correctly, and a status of "INCOMPLETED" indicating that the first error-correction has not been performed correctly;
the second decoding flag includes a status of "COMPLETED" indicating that the second error-correction related to the second control information has been performed correctly, and a status of "INCOMPLETED" indicating that the second error-correction has not been performed correctly; and
each of the first synchronization flag and the second synchronization flag includes a status of "DETECTED" indicating that frame synchronization has been completed, and a status of "UNDETECTED" indicating that frame synchronization has not been completed.

14. A semiconductor integrated circuit, comprising:
a time frequency converting unit operable to convert a frequency division multiplexing signal on a time axis into a signal on a frequency axis to output a data carrier, a pilot carrier, and a transmission control carrier;
an equalizer operable to equalize the data carrier and the transmission control carrier according to a characteristic value of a transmission line obtained from the pilot carrier to output an equalized data carrier and an equalized transmission control carrier;
a first decoding unit operable to decode the equalized transmission control carrier;
a first correcting unit operable to perform first error-correction on an output of said first decoding unit to output first control information and a first decoding flag that indicates a status of the first error-correction;
a second decoding unit operable to decode the transmission control carrier outputted from said time frequency converting unit;
a second correcting unit operable to perform second error-correction on an output of said second decoding unit to output second control information and a second decoding flag that indicates a status of the second error-correction; and
a control information arbitrating unit operable to alternatively select one of the first control information and the second control information based on at least one of the first decoding flag and the second decoding flag.

15. A semiconductor integrated circuit as defined in claim 14, further comprising:
a first synchronization detecting unit operable to perform first frame synchronization detection based on an output of said first decoding unit to output first synchronization information and a first synchronization flag that indicates a status of the first frame synchronization detection;
a second synchronization detecting unit operable to perform second frame synchronization based on an output of said second decoding unit to output second synchronization information and a second synchronization flag that indicates a status of the second frame synchronization detection; and
a synchronization information arbitrating unit operable to alternatively select one of the first synchronization information and the second synchronization information based on at least one of the first synchronization flag and the second synchronization flag.

16. A semiconductor integrated circuit as defined in claim 15, wherein:
the first decoding flag includes a status of "COMPLETED" indicating that the first error-correction related to the first control information has been performed correctly, and a status of "INCOMPLETED" indicating that the first error-correction has not been performed correctly;
the second decoding flag includes a status of "COMPLETED" indicating that the second error-correction related to the second control information has been performed correctly, and a status of "INCOMPLETED" indicating that the second error-correction has not been performed correctly; and
each of the first synchronization flag and the second synchronization flag includes a status of "DETECTED" indicating that frame synchronization has been completed, and a status of "UNDETECTED" indicating that frame synchronization has not been completed.

17. A receiving apparatus, comprising:
an antenna for receiving a signal including a frequency division multiplexing signal;
a tuner operable to receive a signal belonging to a specific bandwidth of the received signal by said antenna to output an analog signal;
an analog-to-digital converter operable to convert the analog signal into a digital signal;
a detecting unit operable to detect the digital signal to output a detected signal;
a time frequency converting unit operable to convert the detected signal on a time axis into a signal on a frequency axis to output a data carrier, a pilot carrier, and a transmission control carrier;
an equalizer operable to equalize the data carrier and the transmission control carrier according to a characteristic value of a transmission line obtained from the pilot carrier to output an equalized data carrier and an equalized transmission control carrier;
a first decoding unit operable to decode the equalized transmission control carrier;
a first correcting unit operable to perform first error-correction on an output of said first decoding unit to output first control information and a first decoding flag that indicates a status of the first error-correction;
a second decoding unit operable to decode the transmission control carrier outputted from said time frequency converting unit;
a second correcting unit operable to perform second error-correction on an output of said second decoding unit to output second control information and a second decoding flag that indicates a status of the second error-correction;
a control information arbitrating unit operable to alternatively select one of the first control information and the second control information based on at least one of the first decoding flag and the second decoding flag;
a first synchronization detecting unit operable to perform first frame synchronization detection based on an output of said first decoding unit to output first synchronization information and a first synchronization flag that indicates a status of the first frame synchronization detection;
a second synchronization detecting unit operable to perform second frame synchronization based on an output of said second decoding unit to output second synchronization information and a second synchronization flag that indicates a status of the second frame synchronization detection;
a synchronization information arbitrating unit operable to alternatively select one of the first synchronization information and the second synchronization information based on at least one of the first synchronization flag and the second synchronization flag;
a third error correcting unit operable to perform error-correction on the equalized data carrier; and
a data decoding unit operable to decode data using the equalized data carrier on which error-correction has been performed.

18. A signal demodulating device as defined in claim 1, wherein the frequency division multiplexing signal is an orthogonal frequency division multiplexing signal that a plurality of carriers multiplexed on a frequency axis have been orthogonally multiplexed mutually.

19. A signal demodulating device as defined in claim 18, wherein the orthogonal frequency division multiplexing signal is a signal defined in one-segment broadcasting of digital terrestrial television services.
